# EUROPEAN PATENT SPECIFICATION

(11) **EP 3 234 347 B1**
(45) Date of publication and mention of the grant of the patent: **19.02.2020**
(21) Application number: 15813087.2
(22) Date of filing: 16.11.2015
(51) Int. Cl.: F02M 61/16, B21D 26/02, C21D 1/00, B23P 9/00

(54) **AN AUTOFRETTAGE APPARATUS FOR AND A METHOD OF INCREASING A FATIGUE STRENGTH OF A PRECHAMBER ELEMENT**
AUTOFRETTAGEVORRICHTUNG UND VERFAHREN ZUR ERHÖHUNG EINER ERMÜDUNGSFESTIGKEIT EINES VORKAMMERELEMENTS
APPAREIL D'AUTOFRETTAGE POUR UN ÉLÉMENT DE PRÉCHAMBRE ET PROCÉDÉ D'ACCROISSEMENT D'UNE RÉSISTANCE À LA FATIGUE DE CELUI-CI

(30) Priority: 17.12.2014 FI 20146109
(43) Date of publication of application: 25.10.2017
(73) Proprietor: Wärtsilä Finland Oy, 65100 Vaasa (FI)
(72) Inventor: FRONDELIUS, Tero, FI-65100 Vaasa (FI); KÖNNÖ, Juho, FI-65100 Vaasa (FI)
(74) Representative: Genip Oy
(86) International application number: PCT/FI2015/050793
(87) International publication number: WO 2016/097467

(56) References cited:
- JP-A- 2009 052 452
- US-A- 4 417 459
- US-A1- 2009 084 255
- US-A1- 2014 331 729
- US-B1- 6 497 128

## Description

### Technical field

The present invention relates to an autofrettage apparatus for increasing a fatigue strength of a prechamber element according to the preamble of claim 1.

The present invention relates also to a method of increasing a fatigue strength of a prechamber element by an autofrettage apparatus.

### Background art

Internal combustion engines may be provided with prechambers so as to facilitate the ignition, combustion efficiency and overall combustion process in the cylinder. Obviously, the prechambers operate in harsh circumstances due to rapid changes in pressure and temperature levels which set very high standards in the design, material properties and structure of prechambers.

Generally speaking, drilling edges or alike, such as nozzles and nozzle openings in prechambers, may have a tendency to crack initiations or cracks which may cause damage or undesirable operation conditions in the engine. In case of crack occurs, the prechamber element needs to be replaced so as to maintain the operational conditions adequate.

Autofrettage treatment has been used for metal products to increase their durability and resistance to stress corrosion cracking. In the autofrettage treatment, the hydraulic fluid is guided with a very high pressure into a drilling or alike space of a work piece so as to generate material internal stresses in the inner walls of the drilling or alike. Thus in the autofrettage treatment the inner surface layer is plastically deformed and the outer surface is subjected to elastic deformation. More specifically, the plastic deformation is an irreversible process whereas the elastic deformation is a reversible process. In the autofrettage treatment the inner surface layers of the work piece are stretched beyond the elastic limit so that the inner surface layer does not return to its original shape once the pressure has been relieved. The outer surface layer of the work piece is stretched also but not beyond its elastic limit, meaning that once the pressure has been relieved the outer surface returns to its original shape. The autofrettage treatment thus increases a fatigue strength of the work piece, more specifically, the inner surface layer of the work piece that is subjected to plastic deformation.

WO2011070063 A1 discloses a device for the autofrettage of work pieces wherein the device comprises a circumferentially closed housing having an inner face for receiving the work piece, at least one sealing element for closing an opening of the work piece and a feed unit for feeding an autofrettage medium into an inner space of the work piece. Also document US 2014/331729 A discloses an autofrettage apparatus for increasing a fatigue strength of a prechamber element for an internal combustion piston engine.

US 2011126393 A1 discloses an autofrettage process for strengthening fuel injector nozzle tips. The process comprises steps of applying a vacuum to the interior volume of the nozzle tip, and plugs are suctioned over each of the nozzle outlets. The nozzle outlets are blocked by pressing the plugs between the nozzle tip and a fixture component. Then the nozzle tip is autofrettaged at least in part by pressurizing the interior volume with an autofrettage liquid. Then the plugs are removed from the nozzle.

EP 2320064 B1 relates to a method of processing an injection nozzle. The method comprises steps of filling recess of the injector serving fluid conduits with a rheopectic fluid or dilatant fluid and then subjecting with autofrettage pressure so that interior pressure constructs itself in the recess of the injector to increase the duration strength of the injector.

An object of the invention is to provide an autofrettage apparatus in which the performance is considerably improved compared to the prior art solutions.

### Disclosure of the Invention

Objects of the invention can be met substantially as is disclosed in the independent claims and in the other claims describing more details of different embodiments of the invention.

An autofrettage apparatus for increasing a fatigue strength a prechamber element for an internal combustion piston engine comprises a body provided with at least one fluid conduit arranged connectable with a incompressible fluid source for causing plastic deformation and increasing the fatigue strength of the prechamber element. Further, the body is formed of at least two body parts attachable pressure tightly together so as to form an enclosed space in the body , and wherein a form and dimensions of the enclosed space are chosen so that the prechamber element can be arranged firmly and non-movably inside the body when enclosing the prechamber element by attaching the at least two body parts pressure tightly together, and wherein the body is provided with an at least one fluid conduit opening into the space arranged connectable with a fluid source such that an incompressible fluid from the fluid source may be arranged to apply pressure against an inner surface of the prechamber element when enclosed by the body, for causing plastic deformation and increasing the fatigue strength of an inner surface layer of the prechamber element.

This provides an autofrettage apparatus which performance is considerably improved. Particularly, the body acts as a safety device during the autofrettage treatment and prevents damage to occur to the prechamber element. The body increases the safety during the autofrettage treatment. Advantageously, autofrettage treatment will induce a compressive stress of over 250 MPa on the inner surfaces of the prechamber element so contributing to highly increased durability and so preventing crack initiation and growth. Specifically, the dimensions of the enclosed space are chosen so that an outer surface of the prechamber element is prevented to expand under internal pressure during the autofrettage treatment. Advantageously, the prechamber element is enclosed completely by the body.

According to an embodiment of the invention the first body part and the second body part are provided with mating counter surfaces providing pressure tight attachment with each other. Advantageously, the prechamber element can be enclosed by using only two body parts which simplifies the overall structure having substantially only a few parts. More advantageously, the outer shape of the body is preferably cubic, rectangular prism or alike.

According to an embodiment of the invention the pressure is applied by means of a pump.

According to another embodiment of the invention the pressure is applied by means of volume displacement pin introduced into the sealed space.

According to an embodiment of the invention, at least one body part is provided with a sealing in connection with the mating surface so as to seal at least two body parts pressure tightly together. Between two body parts is preferably arranged at least one sealing or alike. Advantageously, when the body is formed of two body parts, the sealing is arranged into a second body part and the sealing will be in contact with a surface of a first body part when the first body part and the second body part are attached together. This will provide a pressure tight fastening and structure. According to an embodiment of the invention, the sealing can be arranged into the second body part so that it will be in contact with the prechamber element when the first body part and the second body part are attached together so preventing leakage to occur during the autofrettage treatment.

According to an embodiment of the invention, the second body part is provided with at least two sealing members. A first sealing can be arranged so that the sealing touches a surface of the first body part when the first body part and the second body part are attached together and a second sealing can be arranged into the second body part so that it will touch the prechamber element when the first body part and the second body part are attached together so preventing leakage to occur during the autofrettage treatment. The second sealing may be arranged in a proximity of the opening in the second body part where the incompressible fluid is introduced.

According to an embodiment of the invention, a material of the body is structural steel. In other words each of the body parts that forms the body is structural steel.

According to an embodiment of the invention, the dimensions and the form of the enclosed space are chosen so that an outer surface of the prechamber element is arrangeable in firm contact and non-movably against the inner surface of the space inside the body when attaching the at least two body parts pressure tightly together.

Advantageously, the prechamber element is a lower part of a prechamber, which lower part of the prechamber being arrangeable in a combustion chamber of an engine. Thus, according to an embodiment of the invention, the dimensions and the form of the enclosed space are chosen so that the prechamber element that is a lower part of a prechamber can be arranged, in practical circumstances, firmly and non-movably inside the body when attaching the at least two body parts pressure tightly together. Therefore, the autofrettage apparatus is directed to increase the fatigue strength of the inner surface of the lower part of the prechamber. Namely, the lower part of the prechamber operates in harsh circumstances that may lead to damages and crack initiations or alike for the lower part of the prechamber.

According to an embodiment of the invention, the body parts are attached together by fastening means that are bolts or alike. Advantageously, the bolts or alike may be arranged in a proximity of corners of the body parts when the body is substantially cubic or rectangular prism. When attaching two rectangular prism or cubic body parts together so as to form the body, four bolts can be arranged in each corner so as to seal pressure tightly the body parts together. The first body part and also the second body part are provided with threads corresponding to the bolts or alike. The number of fastening means may vary depending on the application. It is also possible that the body parts are fastened together using bolts and nuts that means that the bolts will go through the body parts. According to an embodiment, the body parts are provided with flanges which can be attached together with bolts and nuts.

According to an embodiment of the invention, the body parts are provided with threads so that the body parts can be screwed pressure tightly together. In case of two body parts, threads in the first body part will correspond to threads in the second body part so that the first and the second body part can be screwed together pressure tightly. This will reduce the amount of parts such as the number of bolts. In this embodiment, the first body part has a circular outer dimensions in an area of threaded structure and the second body part has a circular inner surface with threads corresponding the circular outer dimensions and threads of the first body part. It should be noted that any kind of threaded structure in the body parts are possible, such as a bayonet fastening or alike. Also a combination is possible, that is having the threaded structure in the body parts so that they can screwed together and then seal the fastening using one or more bolts.

Object of the invention is met by a method of increasing a fatigue strength of a prechamber element by an autofrettage apparatus. It is characteristic to the invention that the method comprises steps of
- Attaching the at least two body parts together having the prechamber element installed therebetween,
- sealing pressure tightly the at least two body parts together forming the body and having the prechamber element firmly and non-movably in the enclosed space inside the body, and
- introducing an incompressible fluid at a predetermined pressure via an at least one conduit from a fluid source such that the incompressible fluid from the fluid source is arranged to apply pressure against an inner surface of the prechamber element and filling a chamber portion of the prechamber element with the fluid and increasing the pressure therein so causing plastic deformation of the inner surface of the prechamber element that increases the fatigue strength of an inner surface layer of the prechamber element.

According to an embodiment of the invention, the pressure is increased inside the prechamber element high enough to overcome the yield limit of the material so causing the plastic deformation. According to an embodiment of the invention, the method comprises a step wherein the pressure is increased inside the prechamber element to hundreds of megapascals.

According to an embodiment of the invention, the method comprises a step wherein the pressure is increased inside the prechamber element to more than 500 MPa.

According to an embodiment of the invention, the method comprises a step wherein the pressure is increased inside the prechamber element to more than 700 MPa.

Advantageously, the method will induce a compressive stress of over 250 MPa on the inner surface or inner surface layers of the prechamber element so contributing to highly increased durability which also prevents crack initiations and growth.

### Brief Description of Drawings

In the following, the invention will be described with reference to the accompanying exemplary, schematic drawings, in which
Figure 1 illustrates an autofrettage apparatus according to the first embodiment of the invention,
Figure 2 illustrates a cross section of the autofrettage apparatus in accordance with an embodiment of the invention,
Figure 3 illustrates a cross sectional view of an embodiment of the invention wherein a prechamber element is arranged into a first body part of the autofrettage apparatus,
Figure 4 illustrates a cross sectional view of an embodiment of the invention wherein a prechamber element is arranged pressure tightly between the first body part and a second body part, and
Figure 5 illustrates a cross sectional view of an autofrettage apparatus according to an embodiment of the invention.

### Detailed Description of Drawings

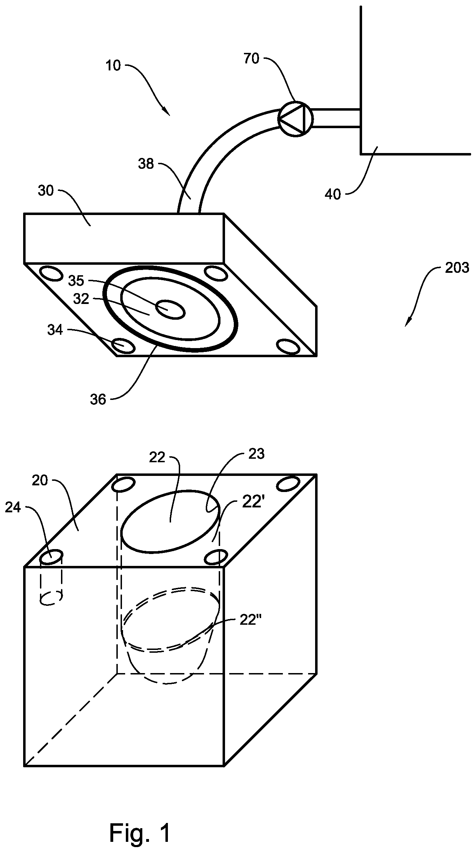

Figure 1 depicts schematically an embodiment of an autofrettage apparatus 10 suitable for increasing a fatigue strength of a prechamber element for an internal combustion piston engine (the prechamber element not shown in Fig. 1). The autrofrettage apparatus 10 according to the embodiment of figure 1 comprises two body parts: a first body part 20 and a second body part 30. The body parts 20, 30 are attachable pressure tightly together so as to form a body 203 having a substantially enclosed space. In an embodiment shown in Figure 1, the second body part 30 is provided with a sealing 36, for example an O-ring so that the first body part 20 and the second body part 30 can be arranged pressure tightly together. Advantageously, there is a groove in the second body part 30 wherein the sealing 36 is arranged.

The first body part 20 is provided with a space 22 into which a prechamber element can be arranged. More specifically, the form and the dimensions of the wholly enclosed space are chosen so that the prechamber element can be arranged firmly and non-movably in the space 22 between the first body part 20 and the second body part 30.

Inner surface of the space has a form and dimension conforms firmly with the outer surface of the prechamber element chosen so that the prechamber element 50 can be arranged firmly and non-movably inside the body 203 when enclosing the prechamber element 50.

Inner surface of the space conforms firmly with the outer surface of the prechamber element. This provides adequate support to the prechamber element when using the autofrettage apparatus.

The space 22 may have several sections of different shapes depending on the shape of the prechamber. As is shown figure 1 a first section 22' of the space 22 may have a greater cross section than a second 22" of the space 22. Here the second section 22" of the space 22 is located farther in the space than the first section 22' of the space 22. The space is therefore a converging space. The first part 20 is provided with a plurality of holes 24 for receiving fastening means. It is shown schematically by dashed line that the drilling hole 24 and the space 22 extend with a certain distance into the first body part 20. The drilling holes may also be through holes.

The second body part 30 is provided with a conduit 35 arranged in flow communication with a fluid source 40 via a channel 38. The conduit 35 opens inside side of the second body part 30. The fluid source 40 is not an integral part of the autofrettage apparatus but it may be connectable to the second body part 30 when needed to operate the apparatus. The channel 38 or the fluid source may be provided with a pump 70 so as to create and maintain pressure of hydraulic fluid to be at an adequate level for autofrettage process. Similarly as the first part 20, the second body part 30 is provided with a plurality of holes 34 for receiving fastening means so that the first body part 20 and the second body part 30 may be fastened pressure tightly together. In the second body part 30 the holes 34 are through holes which go through the second body part 30 so that bolts or alike can go through the second body part 30. Advantageously, the first body part 20 and the second body part 30 are provided with mating counter surfaces providing pressure tight attachment with each other. There are many other suitable known ways available to attach the parts together apparent to a skilled person.

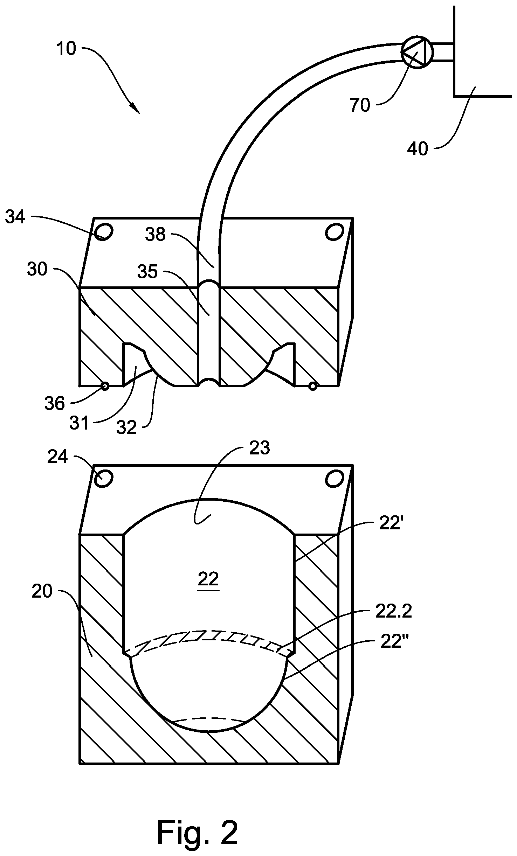

Figure 2 illustrates a cross sectional view of the autofrettage apparatus 10 when the first body part 20 and the second body part 30 are still separated from each other, similarly as in Figure 1. An inner surface 23 of the space 22 may be provided with a collar 22.2 so as to support a prechamber element more firmly. Basically here both the first and the second parts are provided with cavities coinciding with the form of the prechamber element whereas in figure 1 the cavity is in the first part only and the second part operates as a lid. Preferably, the cross section of the space 22 equals with the cross section of the prechamber element which the apparatus is meant to treat. The second body part 30 may be provided with a concave part 31 that will at least partly be in contact with the prechamber element. A shape of the concave part 31 corresponds to a shape of prechamber element. In other words, the concave part 31 acts as a counter part to the prechamber element for receiving forces of the autofrettage process. The sealing 36 is arranged outside the concave part 31 in the second part 30. As can be seen, advantageously, the conduit 35 is arranged substantially in a center portion of the second body part 30 and more advantageously opening in a proximity of the concave part 32. What is important is that the conduit 35 opens to a region which is inside the prechamber element when installed in the apparatus.

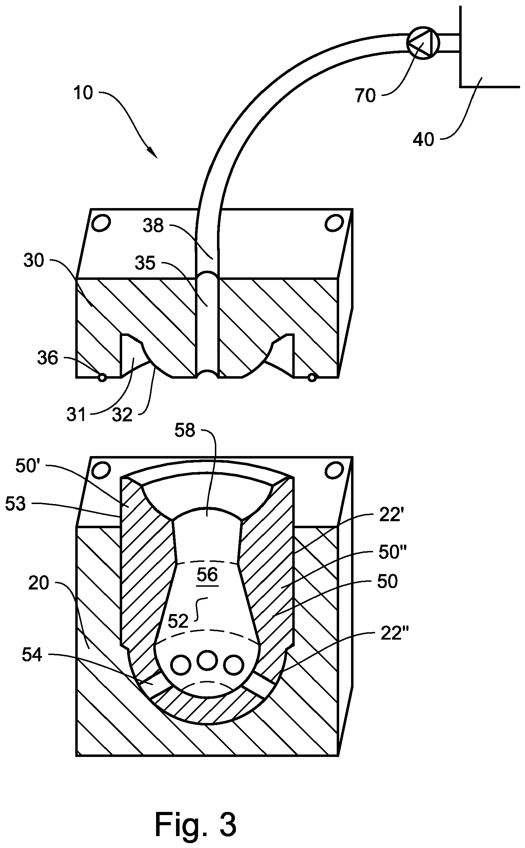

Figure 3 illustrates schematically a cross sectional view of a case wherein a prechamber element 50 is arranged into the space 22 of the first body part 20. As can be seen, dimensions of the space 22 is advantageously chosen so that the prechamber element 50 fits, in practical circumstances, tightly into the space 22. Thus there is a very little or substantially no clearance between the prechamber element 50 and the inner surface 23 of the space in the second body part 20. More specifically, most of an outer surface 53 of the prechamber element 50 touches the inner surface 23 of the space 22. Therefore, when practising the autofrettage treatment, the inner surface 23 of the space 22 prevents the outer surface 53 of the prechamber element 50 to expand. In addition, the inner surface 23 of the space 22 prevents damage to occur to the prechamber element 50. As can be seen, a first portion 50' of the prechamber element 50 extends over the first body part 20 when arranged into the space 22 whereas a second portion 50" is arranged tightly and being surrounded by the space 22. Now it can be seen also that the concave part 31 has actually the counter shape for the first portion 50' of the prechamber element 50. Therefore, the concave part 31 receives the first portion 50' of the prechamber element 50 when the first body part 20 and the second body part 30 are attached together.

Figure 3 illustrates also prechamber nozzle openings 54 and an inner surface 52 of the prechamber element 50. When the prechamber element 50 is arranged into the space 22, the prechamber nozzle openings 54 are located inside the second body part 20. Furthermore, as can be seen the prechamber element 50 is preferably a part of the prechamber, which delimits the actual combustion chamber when installed. This is called here also as lower part of the prechamber. Thus, the invention is particularly directed to increase the fatigue strength of the inner surface of the lower part of the prechamber. The prechamber element 50 is provided with a main opening 58 through which the hydraulic fluid is introduced into a chamber portion 56 of the prechamber element 50. Thus the conduit 35 is arranged to open into the main opening 58, at the center region of the space. Advantageously, a form of the inner surface 23 of the space 22 is chosen so that a portion of the outer surface 53 of the prechamber element 50 is at least partially, but preferably totally in contact with the inner surface 23 of the space 22 of the first body part 20. In other words, the space 22 of the first body part 20 is formed as a counter part for the prechamber element 50 to receive the forces of the autofrettage process. The form of the inner surface 23 is same, in practical circumstances, as a form of the prechamber element 50.

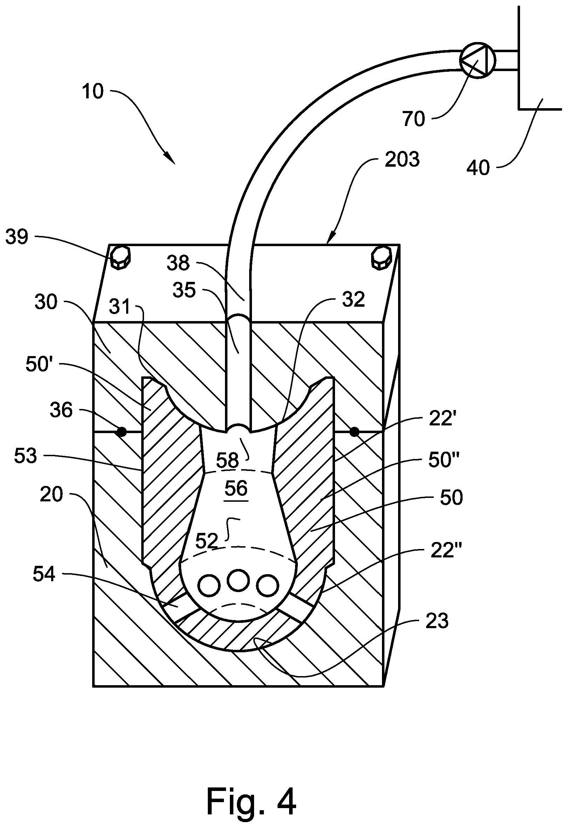

Figure 4 illustrates a cross sectional view of the body when the first body part 20 and the second body part 30 are sealed pressure tightly together and the prechamber element 50 is arranged therebetween. The first body part 20 and the second body part 30 are provided with mating counter surfaces providing pressure tight attachment with each other. Fastening means 39 can be of any kind of conventional fastening means such as bolts or alike. Obviously the number of fastening means may vary. More particularly, it is shown schematically that the prechamber element 50 is arranged between the first body part 20 and the second body part 30. Moreover, the prechamber element 50 is completely enclosed by the space 22 and the concave part 31. The first portion 50' of the prechamber element 50 that has the prechamber nozzle openings 54 is arranged in and surrounded by the first body part 20 and the second portion 50" of the prechamber element 50 is arranged in and surrounded by the second body part 30.

An inner surface of the second body part 30 supports the surface of the second portion 50" of the prechamber element 50. Preferably the inner shape of the second body part conforms with the outer shape of the second portion 50" of the prechamber element 50. Therefore, the prechamber element 50 is arranged, in practical circumstances, firmly and non-movably inside the first body part 20 and the second body part 30. It can be said that the first body part 20 and the second body part 30 forms a body 203 when attached together as shown in Figure 4. The space that encloses the prechamber element 50 is formed of the space 22 of the first body part 20 and the concave part 31 of the second body part 30. The inner surface 23 of the first body part 20 and the inner surface 32 of the second body part 30 has, in practical circumstances, the same form as the outer surface 53 or, in other words, an outer shape of the prechamber element 50. Preferably, there is a very little or substantially no clearance between the prechamber element 50 and the inner surfaces 23 and 32 of the first and the second body parts 20 and 30, respectively. During the autofrettage treatment, the inner surface 23 of the space 22 prevents the outer surface 53 of the prechamber element 50 to expand. The prechamber element 50 is arranged completely inside the enclosed space formed of the space 22 and the concave part 31. Thus the prechamber element 50 is arranged completely inside the body 203. The body acts also as a safety device during the autofrettage treatment. Advantageously, the material of the first body part 20 and the second body part 30 and thus the body 203 is structural steel. Advantageously, an outer shape of the body 203 is fairly simple, for example, cube or rectangular prism or alike.

In the autofrettage treatment, the hydraulic fluid from a fluid source 40 is introduced at a predetermined pressure against the inner surface 52 of the prechamber element 50. In this context the hydraulic fluid means incompressible fluid and is generally a fluid used in the autofrettage treatment known as such. Specifically, the hydraulic fluid flows from the hydraulic fluid source 40 via the channel 38, the conduit 35 of the second body part 30 and the main opening 58 of the prechamber element 50 into the chamber portion 56 of the prechamber element 50. As can be seen, the conduit 35 opens into the chamber portion 56. Pressure of the fluid can be maintained and controlled by the pump 70 located in the channel 38. As can be seen the main opening 58 of the prechamber element 50 is located opposite the prechamber nozzle openings 54. At first the prechamber element 50 is filled with the fluid and then by increasing the fluid pressure therein causes plastic deformation of inner surface layer of the prechamber element 50. During the autofrettage treatment, the outer surface 53 of the prechamber element 50 moves towards and presses against the inner surface 23 of the space 22 so preventing the outer surface 53 of the prechamber 50 to expand. Advantageously, to more than 500 MPa pressure level provided so as to increase the fatigue strength of the inner surface layer of the prechamber element 50. The autofrettage treatment prevents the prechamber element 50 from crack initiation and growth, cracking from the drillings and enhances the durability of the prechamber element. Advantageously, the autofrettage treatment increases the fatigue strength of inner surface layers of the prechamber nozzle openings 54.

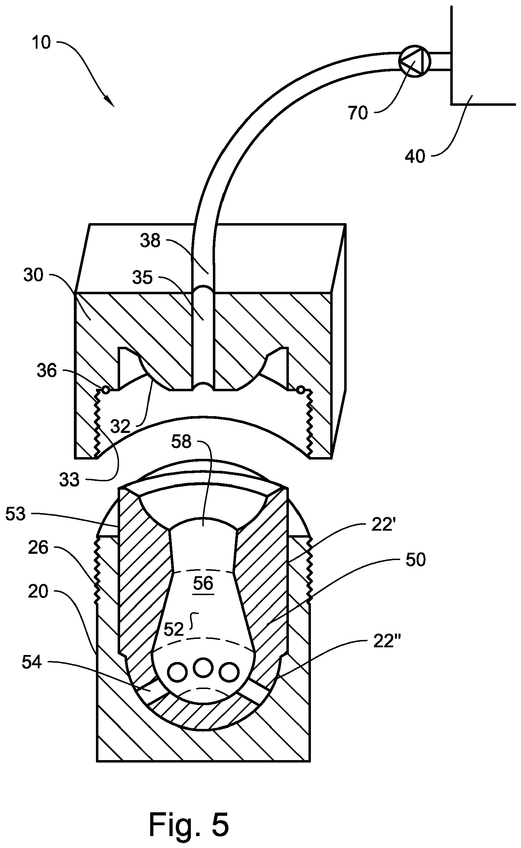

Figure 5 illustrates yet another embodiment of the autofrettage apparatus 10. The first body part 20 and the second body part 30 are provided with threads 26 compatible with each other. Thus, the first body part 20 and the second body part 30 can be screwed pressure tightly together. Similarly as in Figure 1-4, the second body part 30 is provided with the sealing 36 and the conduit 35 through which the hydraulic fluid may be introduced from the hydraulic fluid source 40 and via the channel 38. Obviously, a cross section of the first body part 20 is substantially circular, at least in a threaded area 26. Similarly, an inner surface in an area of threaded structure 33 of the second body part 30 is circular. It should be noted that different types of threaded structures are possible as well as a bayonet fastening or alike. As can be seen, the body parts 20 and 30 may be arranged so that one body part is at least partially surrounded and enclosed by another body part. Now the first body part 20 and the second body part 30 has counter surfaces i.e. the threads so as to provide a pressure tight sealing fastening.

Figures 1-5 discloses only a few preferable embodiments of how the body parts 20 and 30 may be sealed pressure tightly together. However, the invention is not limited to those embodiments only. While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An autofrettage apparatus (10) for increasing a fatigue strength of a prechamber element (50) for an internal combustion piston engine, comprising a body (203) provided with at least one fluid conduit arranged connectable with a incompressible fluid source (40) for causing plastic deformation and increasing the fatigue strength of the prechamber element (50), **characterized in that**
- the body (203) is formed of at least two body parts (20, 30) attachable pressure tightly together so as to form an enclosed space (22, 31) in the body (203), and
- wherein a form and dimensions of the enclosed space (22, 31) are chosen so that the prechamber element (50) can be arranged firmly and non-movably inside the body (203) when enclosing the prechamber element (50) by attaching the at least two body parts (20, 30) pressure tightly together, such that an inner surface (23) of the space (22, 31) prevents an outer surface (53) of the prechamber element (50) to expand and
- wherein the at least one fluid conduit (35) is opening into the space (22,31) of the body (203), and
- the conduit is arranged to apply pressure against an inner surface of the prechamber element (50) when enclosed by the body (203), for causing plastic deformation and increasing the fatigue strength of an inner surface layer of the prechamber element (50).

2. An autofrettage apparatus according to claim 1, **characterized in that** the first body part (20) and the second body part (30) are provided with mating counter surfaces providing pressure tight attachment with each other.

3. An autofrettage apparatus according to anyone of preceding claims 1-2, **characterized in that** at least one body part (20, 30) is provided with a sealing (36) in connection with the mating surface so as to seal at least two body parts (20, 30) pressure tightly together.

4. An autofrettage apparatus according to anyone of preceding claims 1-3, **characterized in that** the dimensions and the form of the enclosed space (22, 31) are chosen to conform with a form and dimensions of the prechamber element intended to be treated by the apparatus, so that an outer surface of the prechamber element (50) is arrangeable in firm contact and non-movably against the inner surface of the space (22, 31) inside the body (203) when attaching the at least two body parts (20, 30) pressure tightly together.

5. A method of increasing a fatigue strength of a prechamber element (50) for an internal combustion engine by an autofrettage apparatus (10), comprising introducing an incompressible fluid at a predetermined pressure via an at least one conduit (35) from a fluid source (40) such that the incompressible fluid is arranged to apply pressure against the prechamber element (50) so causing plastic deformation of the prechamber element (50) that increases the fatigue strength of an inner surface layer of the prechamber element (50),
**characterized by**
- Providing at least two body parts (20, 30) attachable pressure tightly together so as to form a body (203) having an enclosed space (22, 31) therein,
- Arranging a prechamber element (50) into the enclosed space (22,21) and attaching the at least two body parts (20, 30) together having the prechamber element (50) installed into the enclosed space (22,31) in supported manner,
- sealing pressure tightly the at least two body parts (20, 30) together forming the body (203) and having the prechamber element (50) firmly and non-movably in the enclosed space (22, 31) inside the body (203), such that an inner surface (23) of the space (22,31) prevents an outer surface (53) of the prechamber element (50) to expand, and
- the incompressible fluid from the fluid source (40) is arranged to apply pressure against an inner surface (52) of the prechamber element (50) and filling a chamber portion (56) of the prechamber element (50) with the fluid and increasing the pressure therein so causing plastic deformation of the inner surface (52) of the prechamber element (50) that increases the fatigue strength of an inner surface layer of the prechamber element (50).

6. A method according to claim 5, **characterized in that** the pressure is increased inside the prechamber element to more than 500 MPa.

7. A method according to claim 6, **characterized in that** the pressure is increased inside the prechamber element to more than 700 MPa.

8. A method according to claim 5, **characterized in that** the pressure is increased inside the prechamber element (50) high enough to overcome the yield limit of the material.

## Patentansprüche

1. Autofrettage-Vorrichtung (10) zur Steigerung einer Dauerfestigkeit eines Vorkammerelements (50) für einen Kolbenverbrennungsmotor, umfassend einen Körper (203) der mit mindestens einer Fluidleitung versehen ist, die mit einer inkompressiblen Fluidquelle (40) verbindbar angeordnet ist, um eine plastische Verformung zu bewirken und die Dauerfestigkeit des Vorkammerelements (50) zu erhöhen, **dadurch gekennzeichnet, dass**
- der Körper (203) aus mindestens zwei Körperteilen (20, 30) gebildet ist, die druckdicht aneinander befestig werden können, um einen umschlossenen Raum (22, 31) im Körper (203) zu bilden, und
- wobei eine Form und Abmessungen des umschlossenen Raums (22, 31) so gewählt sind, dass das Vorkammerelement (50) fest und unbeweglich innerhalb des Körpers (203) beim Umschließen des Vorkammerelements (50) angeordnet werden kann, indem die mindestens zwei Körperteile (20, 30) druckfest aneinander befestigt werden, derart dass eine Innenfläche (23) des Raums (22, 31) verhindert, dass sich eine Außenfläche (53) des Vorkammerelements (50) ausdehnt, und
- wobei die mindestens eine Fluidleitung (35) sich in den Raum (22, 31) des Körpers (203) öffnet, und
- die Leitung angeordnet ist, um Druck auf eine Innenfläche des Vorkammerelements (50) auszuüben, wenn sie vom Körper (203) umschlossen ist, um eine plastische Verformung zu verursachen und die Dauerfestigkeit einer Innenflächenschicht des Vorkammerelements (50) zu steigern.

2. Autofrettage-Vorrichtung nach Anspruch 1, **dadurch gekennzeichnet, dass** der erste Körperteil (20) und der zweite Körperteil (30) mit zusammenpassenden Gegenflächen versehen sind, die eine druckdichte Befestigung aneinander bereitstellen.

3. Autofrettage-Vorrichtung nach einem der vorhergehenden Ansprüche 1-2, **dadurch gekennzeichnet, dass** mindestens ein Körperteil (20, 30) mit einer Dichtung (36) in Verbindung mit zusammenpassenden Gegenfläche versehen ist, um mindestens zwei Körperteile (20, 30) druckdicht miteinander zu versiegeln.

4. Autofrettage-Vorrichtung nach einem der vorhergehenden Ansprüche 1-3, **dadurch gekennzeichnet, dass** die Abmessungen und die Form des umschlossenen Raums (22, 31) so gewählt sind, dass sie mit der Form und den Abmessungen des Vorkammerelements, das von der Vorrichtung behandelt werden soll, übereinstimmen, so dass eine Außenfläche des Vorkammerelements (50) in festem Kontakt und unbeweglich gegen die Innenfläche des Raums (22, 31) innerhalb des Körpers (203) anordenbar ist, wenn die mindestens zwei Körperteile (20, 30) druckdicht aneinander befestigt werden.

5. Verfahren zur Steigerung einer Dauerfestigkeit eines Vorkammerelements (50) für einen internen Verbrennungsmotor durch eine Autofrettage-Vorrichtung (10), umfassend das Einleiten eines inkompressiblen Fluids mit einem vorgegebenen Druck über mindestens eine Leitung (35) von einer Fluidquelle (40) derart, dass das inkompressible Fluid angeordnet ist, um Druck gegen das Vorkammerelement (50) auszuüben, wodurch eine plastische Verformung des Vorkammerelements (50) verursacht wird, die die Dauerfestigkeit einer Innenflächenschicht des Vorkammerelements (50) erhöht, **gekennzeichnet durch**
- Bereitstellen von mindestens zwei Körperteilen (20, 30), die druckdicht aneinander befestigt werden können, um einen Körper (203) mit einem darin eingeschlossenen Raum (22, 31) zu bilden,
- Anordnen eines Vorkammerelements (50) im umschlossenen Raum (22, 21) und Befestigen der mindestens zwei Körperteile (20, 30) aneinander, wobei das Vorkammerelement (50) in abgestützter Weise im umschlossenen Raum (22, 31) installiert wird,
- druckdichtes Versiegeln der mindestens zwei Körperteile (20, 30), die den Körper (203) bilden, und wobei das Vorkammerelement (50) fest und unbeweglich im umschlossenen Raum (22, 31) innerhalb des Körpers (203) ist, derart dass eine Innenfläche (23) des Raums (22, 31) verhindert, dass sich eine Außenfläche (53) des Vorkammerelements (50) ausdehnt, und
- dass das inkompressible Fluid von der Fluidquelle (40) so angeordnet ist, dass es Druck gegen eine Innenfläche (52) des Vorkammerelements (50) ausübt und einen Kammerabschnitt (56) des Vorkammerelements (50) mit dem Fluid füllt und den Druck darin erhöht, wodurch eine plastische Verformung der Innenfläche (52) des Vorkammerelements (50) verursacht wird, die die Dauerfestigkeit einer Innenflächenschicht des Vorkammerelements (50) steigert.

6. Verfahren nach Anspruch 5, **dadurch gekennzeichnet, dass** der Druck im Inneren des Vorkammerelements auf mehr als 500 MPa erhöht wird.

7. Verfahren nach Anspruch 6, **dadurch gekennzeichnet, dass** der Druck im Inneren des Vorkammerelements auf mehr als 700 MPa erhöht wird.

8. Verfahren nach Anspruch 5, **dadurch gekennzeichnet, dass** der Druck im Inneren des Vorkammerelements (50) hoch genug erhöht wird, um die Elastizitätsgrenze des Materials zu überwinden.

## Revendications

1. Appareil d'autofrettage (10) pour augmenter une résistance à la fatigue d'un élément de préchambre (50) pour un moteur à pistons à combustion interne, comprenant un corps (203) doté d'au moins un conduit de fluide agencé de façon à pouvoir être relié à une source de fluide incompressible (40) pour provoquer la déformation plastique et augmenter la résistance à la fatigue de l'élément de préchambre (50), **caractérisé en ce que**
- le corps (203) est formé d'au moins deux parties de corps (20, 30) pouvant être fixées ensemble en étant étanches à la pression de façon à former un espace joint (22, 31) dans le corps (203), et
- dans lequel une forme et des dimensions de l'espace joint (22, 31) sont choisies de façon à ce que l'élément de préchambre (50) puisse être agencé fermement et de façon non mobile à l'intérieur du corps (203) lors de la fermeture de l'élément de préchambre (50) par la fixation des aux moins deux parties de corps (20 30) ensemble en étant étanches à la pression, de telle façon qu'une surface intérieure (23) de l'espace (22, 31) empêche une surface extérieure (53) de l'élément de préchambre (50) de s'étendre et
- dans lequel l'au moins un conduit de fluide (35) s'ouvre dans l'espace (22, 31) du corps (203), et
- le conduit est agencé pour appliquer une pression contre une surface intérieure de l'élément de préchambre (50) lorsque fermé par le corps (203), pour provoquer la déformation plastique et augmenter la résistance à la fatigue sur une couche de surface intérieure de l'élément de préchambre (50).

2. Appareil d'autofrettage selon la revendication 1, **caractérisé en ce que** la première partie de corps (20) et la seconde partie de corps (30) sont dotées de contre-surfaces s'emboîtant fournissant une fixation étanche à la pression l'une avec l'autre.

3. Appareil d'autofrettage selon l'une quelconque des revendications précédentes 1 - 2, **caractérisé en ce qu'**au moins une partie de corps (20, 30) est dotée d'un joint étanche (36) en connexion avec la surface s'emboîtant de façon à fermer hermétiquement au moins deux parties de corps (20, 30) ensemble en étant étanches à la pression.

4. Appareil d'autofrettage selon l'une quelconque des revendications précédentes 1 - 3, **caractérisé en ce que** les dimensions et la forme de l'espace joint (22, 31) sont choisies pour se conformer à une forme et aux dimensions de l'élément de préchambre destiné à être traité par l'appareil de façon à ce qu'une surface extérieure de l'élément de préchambre (50) puisse être agencée en contact ferme et non mobile contre la surface intérieure (22, 31) de l'espace (22, 31) à l'intérieur du corps (203) lors de la fixation des au moins deux parties de corps (20, 30) ensemble en étant étanches à la pression.

5. Procédé pour augmenter une résistance à la fatigue d'un élément de préchambre (50) pour un moteur à pistons à combustion interne par un appareil d'autofrettage (10), comprenant d'introduire un fluide incompressible à une pression prédéterminée par le biais d'au moins un conduit (35) à partir d'une source de fluide (40) de telle façon que le fluide incompressible soit agencé pour appliquer de la pression contre l'élément de préchambre (50) provoquant ainsi la déformation plastique de l'élément de préchambre (50) qui augmente la résistance à la fatigue d'une couche de surface intérieure de l'élément de préchambre (50),
**caractérisé par**
- la fourniture d'au moins deux parties de corps (20, 30) pouvant être fixées ensemble en étant étanches à la pression de façon à former un corps (203) ayant un espace joint (22, 31) à l'intérieur,
- l'agencement d'un élément de préchambre (50) dans l'espace joint (22, 21) et la fixation des au moins deux parties de corps (20, 30) ensemble en ayant l'élément de préchambre (50) installé dans l'espace joint (22, 31) de manière supportée,
- la fermeture hermétique des au moins deux parties de corps (20, 30) en étant étanches à la pression formant le corps (203) et en ayant l'élément de préchambre (50) fermement et non mobile dans l'espace joint (22, 31) à l'intérieur du corps (203) de telle façon qu'une surface intérieure (23) de l'espace (22, 31) empêche une surface extérieure (53) de l'élément de préchambre (50) de s'étendre, et
- le fluide incompressible venant de la source de fluide (40) est agencé pour appliquer de la pression contre une surface intérieure (52) de l'élément de préchambre (50) et le remplissage d'une partie de chambre (56) de l'élément de préchambre (50) avec le fluide et l'augmentation de la pression à l'intérieur provoquant ainsi la déformation plastique de la surface intérieure (52) de l'élément de préchambre (50) qui augmente la résistance à la fatigue d'une couche de surface intérieure de l'élément de préchambre (50) .

6. Procédé selon la revendication 5, **caractérisé en ce que** la pression est augmentée à l'intérieur de l'élément de préchambre à plus de 500 MPa.

7. Procédé selon la revendication 6, **caractérisé en ce que** la pression est augmentée à l'intérieur de l'élément de préchambre à plus de 700 MPa.

8. Procédé selon la revendication 5, **caractérisé en ce que** la pression est augmentée à l'intérieur de l'élément de préchambre (50) de façon suffisamment élevée pour surmonter la limite élastique du matériau.
